(19) Europäisches Patentamt
European Patent Office
Office européen des brevets

(11) Publication number: 0 242 058 A1

(12) # EUROPEAN PATENT APPLICATION

(21) Application number: 87302250.3

(51) Int. Cl.⁴: G01D 5/20 , B60G 17/00

(22) Date of filing: 17.03.87

(30) Priority: 15.04.86 GB 8609144

(43) Date of publication of application: 21.10.87 Bulletin 87/43

(84) Designated Contracting States: DE ES FR IT NL

(71) Applicant: ARMSTRONG PATENTS CO. LIMITED
Gibson Lane Melton
North Ferriby North Humberside, HU14 3HY(GB)

(72) Inventor: Wardle, Michael John
46 Eastfield Avenue
Haxby York(GB)

(74) Representative: Huntingford, David Ian et al
W.P. THOMPSON & CO. Coopers Building
Church Street
Liverpool L1 3AB(GB)

(54) **Improvements relating to position sensing.**

(57) A device for detecting the position of a displaceable magnetic member (5a) having two coils, one of which (2a) is an exciting coil adapted to establish a magnetic field around the path of displacement of the magnetic member (5a) and the other (3a) of which is a pick-up coil whose e.m.f. is modified by the position of the magnetic member (5a) relative to these coils. In order to avoid the necessity of conventional detecting devices to employ expensive phase-sensitive detectors on the detected signal, the exciting coil is arranged to be supplied with an exciting signal of ramp waveform, such that the resulting signal from the pick-up coil (3a) comprises a substantially flat-topped pulse.

SINGLE CHIP MICROCOMPUTER OR DIGITAL I/O CHIP
A/D Input
CLEAN UP SPIKES + LEVEL SHIFT
Fig 4

EP 0 242 058 A1

# IMPROVEMENTS RELATING TO POSITION SENSING.

The present invention is concerned with a means of sensing the position of one member relative to another and in particular, but not exclusively, with a means of sensing the height of the spring mass of a vehicle relative to its unsprung mass in a vehicle suspension system.

As explained in our previous GB Patent No.2027207B (to which reference is hereby directed), in the great majority of road and rail vehicles, hydraulic or pneumatic shock absorbers or dampers are interposed between the sprung and the unsprung masses of a vehicle and it is well known to employ such shock absorbers, suitably modified from their conventional form, to achieve a height adjustment of the sprung relative to the unsprung mass, by transfer of working fluid between the shock absorbers and an associated fluid reservoir. For this purpose, prior to our abovementioned patent, it was usual to control the requisite transfer of working fluid by means of external lever, or similarly mechanically operated, fluid flow control valves or by electro-magnetically actuated valves controlled by electric switches, the mechanical operating means or the electric switches acting to sense the height of the sprung mass relative to the unsprung one.

In order to improve on the latter means of sensing the relative heights of the sprung and unsprung masses, it was proposed in our GB Patent No.2027207B to provide an electrical coil assembly on the outer cover of a vehicle shock absorber of the type having a body which is at least partly metallic and which, in use, moves relative to the cover. The electrical coil assembly was arranged to sense the position of the shock absorber body, thereby to change an electrical signal which was indicative of the relative height between the sprung and unsprung masses of the vehicle. This was achieved in that the coil assembly included two coils, one of which induced a magnetic field around the shock absorber body and the other of which was a pick-up whose e.m.f. was modified by the position of the shock absorber body as it moved into and out of the two coils.

In this known system of our GB Patent No.2027207B, the signal applied to the exciting coil was essentially sinusoidal in nature. This resulted in the need for phase sensitive detectors to determine the positional information. The use of such detectors, when filtered, gave good linear output voltage from negative through zero to positive, according to position, together with excellent linearity and accuracy. However, the use of such sinusoidal signals and the consequential need for such phase sensitive detectors resulted also in a number of disadvantages, particularly for vehicle applications where modern microcomputer controls are used which involve analogue to digital (A/D) conversion of the sensor signals for computational purposes. Such disadvantages in vehicle/microcomputer controls include, inter alia, the fact that (a) the resulting system is expensive and over-engineered, (b) filtering introduces time/phase lags which vary with frequency/rate of change, thereby making compensation difficult, (c) it is difficult to synchronise the A/D converter or microcomputer to the sinewave without overheads in hardware and software, and (d) response times are poor.

It is an object of the present invention to remove or substantially mitigate these disadvantages of the known system.

In accordance with a first aspect of the present invention, there is provided a device for detecting the position of a displaceable magnetic member comprising at least two coils, one of which is an exciting coil adapted to establish a magnetic field around the path of displacement of the magnetic member and another of which is a pick-up coil whose e.m.f. is modified by the position of the magnetic member relative to these coils, and means for supplying the exciting coil with an exciting signal of ramp waveform whereby the resulting signal from the pick-up coil comprises a substantially flat-topped pulse.

The provision of a flat-topped pulse enables (a) the signal to be synchronised to a computer, allowing A/D readings to be taken at an exact and repeatable point, preferably in each half-cycle; and (b) only one A/D reading to be necessary each half cycle. Furthermore, since the signal is flat-topped, spike filtering does not cause either phase or amplitude errors at the time of A/D reading.

Preferably, the excitation coil is current driven to obviate temperature drift problems.

The ramp signal may be provided using an integrated square wave input pulse provided, for example, by a microcomputer or digital I/O chip.

In accordance with a second aspect of the present invention, there is provided a vehicle shock absorber having an outer cover and a body which is at least partly of magnetic material and which is displaceable relative to the cover, and at least two coils, one of which is an exciting coil adapted to establish a magnetic field around the path of displacement of the shock absorber body and another of which is a pick-up coil whose e.m.f. is modified by the position of thebody relative to the coils, and means for supplying said exciting coil with an exciting signal of ramp waveform whereby the resulting signal from the pick-up coil comprises a substantially flat-topped pulse.

The invention is described further hereinafter, by way of example only, with reference to the accompanying drawings, in which:

Fig. 1 is an elevation, partly in axial section of a plastics dust cover fitted to a telescopic shock absorber;

Fig. 2 is an example of the current exciting waveform used in the known system of our prior GB Patent No. 2027207B;

Fig. 3 shows an example of the pick-up signal obtained using the current exciting waveform of Fig. 2;

Fig. 4 is a diagrammatic representation of a system embodying the present invention; and

Fig. 5 shows examples of waveforms obtained at various points in the system of Fig. 4.

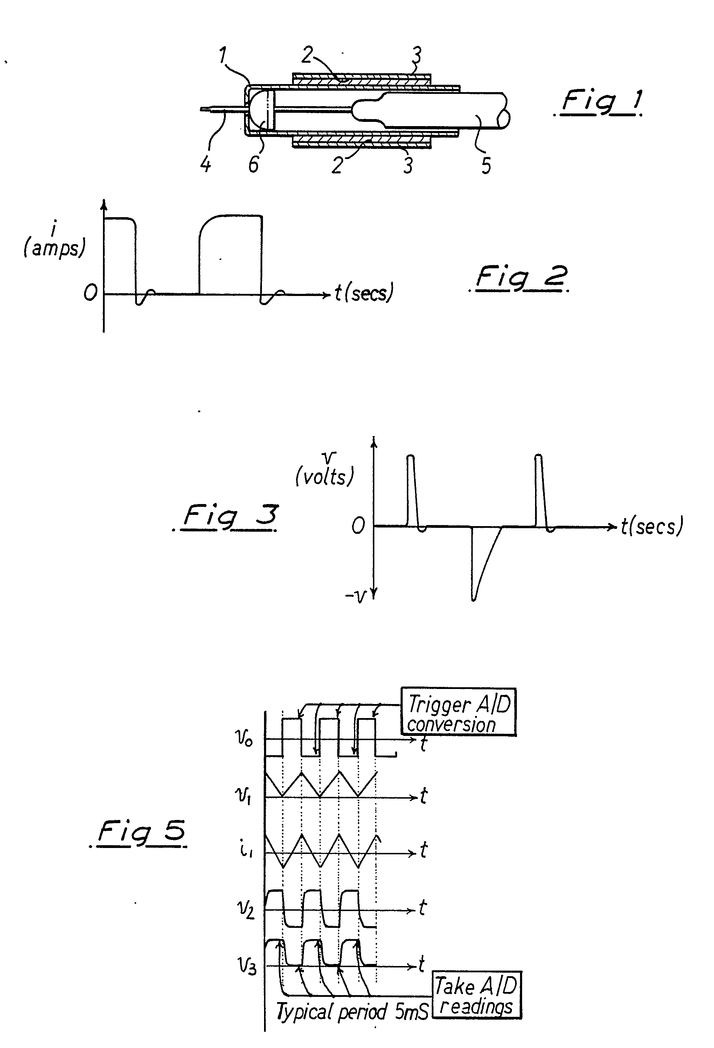

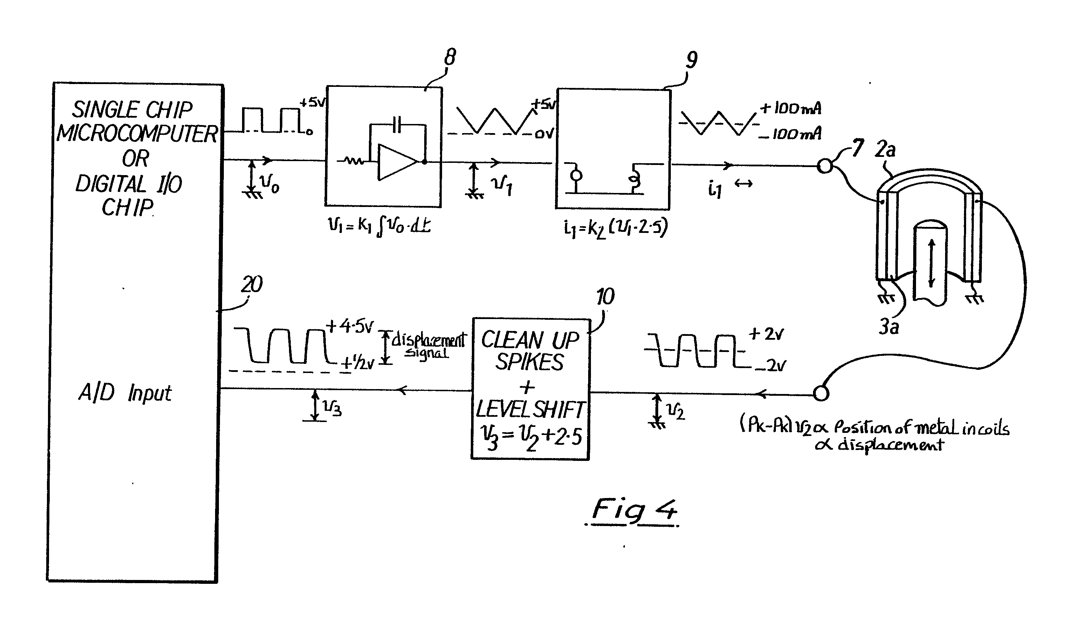

Fig. 1 shows a typical shock absorber structure wherein a plastics cover 1 carries an exciting coil 2 and pick-up coil 3, the whole assembly being attached to the shock absorber piston rod 4 and held by the dust cover former 6. The main shock absorber body is designated by reference numeral 5.

In this conventional system, the signal applied to the exciting coil 2 has been an oscillating signal of generally square waveform as shown in Fig. 2 produced, for example, by a multivibrator. This square wave signal in the exciting coil 2 gives rise to an output signal in the pick-up coil 3 having a waveform as shown in Fig. 3 since, inter alia, the magnetic linkage includes the shock absorber body, and is proportional to the vehicle height.

In use, as the shock absorber body 5 moves into or out of the vicinity of the coils, the magnetic field generated by the exciting coil 2 is modified and causes an amplitude variation on the pick-up signal of Fig. 3.

The output signal of Fig. 3 is rectified to provide a signal representative, for example, of a direct measure of vehicle load or an indication of overload or it may be used to trigger operation of solenoid controlled fluid valves to achieve automatic vehicle levelling.

Referring now to Figs. 4 and 5, in the present system, the excitation coil 2a is provided with a signal of ramp (sawtooth) waveform via a terminal 7. A 5-volt square wave voltage $v_o$ is generated by a single chip microcomputer or digital I/O chip 20 and integrated in an integrator 8 to provide a sawtooth waveform $V_1 = k_1 \int v_o.dt$ (see Fig.4). The voltage $V_1$ is converted to a current $i_1 = K_2 (V_1 - 2.5)$ in a voltage to current converter 9 and applied to the exciting coil 2 via the terminal 7.

As indicated in Fig.4, the signal $V_2$ obtained from the pick-up coil 3a is essentially flat-topped. This means that it can be filtered without phase/time lag penalties and can be fed directly to an analogue to digital input or microcomputer (such as the unit 20) without the need for phase sensitive detectors etc. A signal conditioning unit 10 is, however, preferably provided for cleaning up spikes and for effecting a level shift. In the present case the signal conditioning unit 10 provides a signal $V_3 = V_2 + 2.5$.

Not using sine waves/phase sensitive detectors gives a trade off in accuracy which is more than compensated for in the cheapness of the very simple electronics required compared to the requirements of traditional sine wave excitation/signals, rapid response, and simple synchronisation with the computer. As a result, the A/D reading can be taken at an exact and repeatable point in each half cycle. It will be noted that only one A/D reading is needed each half cycle resulting in the system having a low processing time requirement. Furthermore, since the signals $V_2$ and $V_3$ are flat-topped, spike filtering does not cause either phase or amplitude errors at the time of the A/D reading.

Temperature drift problems incurred in the traditional systems can be eliminated by current driving the excitation coil as described above and by ensuring that the copper resistance of all coils is small compared with resistance in the controller.

Since the microcomputer controls the primary square wave ($V_o$), it needs to read the A/D input only once (just prior to toggling the square wave), each half cycle to obtain peak readings, i.e. it knows the optimum time to take an A/D reading. As mentioned above, it takes exactly one reading each half cycle, thereby saving sampling rates and processing time. The output signal ($V_3$), which is almost a square wave, has settled for some time prior to the A/D reading.

It should be noted that the voltage and current values used in the abovedescribed and illustrated embodiment are by way of example only and the invention is not restricted to the use of these particular values. The particular values chosen here are found to be convenient when the peak to peak magnitude of $V_3$ is to be about 5 volts.

It should also be noted that the same microcomputer or digital I/O chip 20 can be used to drive a plurality of sets of coils 2,3 whereby all resulting signals are synchronised with a single common control. This can be extremely useful where information from a plurality of sensors or channels is to be processed, e.g. from the four wheels of a car.

Although described above in connection with a vehicle suspension system, the present technique can be used in connection with many other situations wherein movement of a magnetic member is to be detected.

## Claims

1. A device for detecting the position of a displaceable magnetic member, comprising at least two coils, one of which is an exciting coil adapted to establish a magnetic field around the path of displacement of the magnetic member and another of which is a pick-up coil whose e.m.f. is modified by the position of the magnetic member relative to these coils, characterised by means (20,8) for supplying the exciting coil (2a) with an exciting signal of ramp waveform such that the resulting signal from the pick-up coil (3a) comprises a substantially flat-topped pulse.

2. A device as claimed in claim 1, wherein the exciting coil is current driven.

3. A device as claimed in claim 1 or 2, wherein the ramp signal is formed by an integrated square wave input.

4. A device as claimed in claim 3, wherein the square wave input is provided by a microcomputer or by a digital I/O chip.

5. A device as claimed in claim 1, wherein the means for supplying the ramp waveform comprises a first means (20) which provides a squarewave voltage output ($V_o$), an integrator (8) which produces a sawtooth voltage waveform ($V_1$) from said square wave ($V_o$), and a voltage/current converter (9) which produces a sawtooth current waveform ($i_1$) from said voltage waveform ($V_1$) for application to the pick-up coil (2a).

6. A vehicle shock absorber having an outer cover and a body which is at least partly of magnetic material and which is displaceable relative to the cover, and at least two coils, one of which is an exciting coil adapted to establish a magnetic field around the path of displacement of the shock absorber body and another of which is a pick-up coil whose e.m.f. is modified by the position of the body relative to the coils, characterised by means (20,8) for supplying said exciting coil (2a) with an exciting signal of ramp waveform such that the resulting signal from the pick-up coil (3a) comprises a substantially flat-topped pulse.

7. A shock absorber as claimed in claim 6, wherein the exciting coil is current driven.

8. A shock absorber as claimed in claim 6 or 7, wherein the ramp signal is provided by an integrated square wave input.

1
2
3
4
6
2
3
5
Fig 1
i
(amps)
0
t (secs)
Fig 2

V
(volts)
Fig 3
0
t (secs)
-V

Trigger A/D conversion
$V_0$
$V_1$
$i_1$
$V_2$
$V_3$
t
Fig 5
Take A/D readings
Typical period 5mS

SINGLE CHIP MICROCOMPUTER OR DIGITAL I/O CHIP
A/D Input
8
9
10
20
7
2a
3a
+5V
0V
+100mA
-100mA
$v_0$
$v_1$
$i_1$
$v_1 = k_1 \int v_0 \cdot dt$
$i_1 = k_2 (v_1 - 2.5)$
CLEAN UP SPIKES + LEVELSHIFT
$v_3 = v_2 + 2.5$
+4·5V
+½V
displacement signal
+2V
-2V
$v_2$
$v_3$
(Pk-Pk) $v_2$ ∝ Position of metal in coils ∝ displacement


Fig 4

European Patent Office

# EUROPEAN SEARCH REPORT

Application number

EP 87 30 2250

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 128 824 (PETERCEM S.A.) * Whole document * | 1-5 | G 01 D 5/20<br>B 60 G 17/00 |
| Y | | 6-8 | |
| | --- | | |
| Y | EP-A-0 039 181 (LUCAS INDUSTRIES LTD) * Figures 1-5; page 12, line 31 - page 16, line 19 * | 6-8 | |
| | --- | | |
| X | DE-A-3 329 515 (KROHNE MESSTECHNIK GmbH) * Whole document * | 1,2 | |
| A | | 3-8 | |
| | --- | | **TECHNICAL FIELDS SEARCHED (Int. Cl.4)** |
| X | DE-A-3 241 018 (VACUUMSCHMELZE GmbH) * Page 4, line 5 - page 11, line 15; figures * | 1,2 | G 01 D 5/00<br>B 60 G 17/00 |
| A | | 3-8 | |
| | --- | | |
| A | US-A-4 540 188 (GENERAL MOTORS CORP.) * Figures 1-3,8; column 2, line 42 - column 3; column 9, line 62 - column 11, line 6 * | 1,6,7,8 | |
| | --- -/- | | |

The present search report has been drawn up for all claims

| Place of search | Date of completion of the search | Examiner |
|---|---|---|
| THE HAGUE | 22-07-1987 | BROCK T.J. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent Office

# EUROPEAN SEARCH REPORT

Application number

EP 87 30 2250



## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | GB-A-2 027 207 (ARMSTRONG PATENTS CO.)<br>* Whole document *<br>----- | 1-8 | |

TECHNICAL FIELDS SEARCHED (Int. Cl.4)

The present search report has been drawn up for all claims

| Place of search | Date of completion of the search | Examiner |
|---|---|---|
| THE HAGUE | 22-07-1987 | BROCK T.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82